# EUROPEAN PATENT APPLICATION

(11) **EP 4 012 580 A1**
(43) Date of publication of application: **15.06.2022**
(21) Application number: 20212431.9
(22) Date of filing: 08.12.2020
(51) Int. Cl.: G06F 16/901, G06N 5/02, G06F 16/36

(54) **METHOD AND SYSTEM FOR INTEGRATING ELEMENTS EXTRACTED FROM AN ADDITIONAL DATA SOURCE INTO AN INTEGRATED DOMAIN MODEL**

(71) Applicant: Siemens Aktiengesellschaft, 80333 München (DE)
(72) Inventor: Beyer, Dagmar, 80339 München (DE); Dauer, Maximilian, 93197 Zeitlarn (DE); Milicic Brandt, Maja, 81827 München (DE); Rümmele, Nataliia, 81739 München (DE)

(57) **Abstract**

The invention relates to a method for integrating second elements extracted from an additional data source into an integrated domain model describing existing components in a technical domain, existing component properties and relationships among the existing components, comprising:
- providing a set of rules describing a mapping of each type of relationship between two elements onto each type of relationship between two components,
- proposing at least one semantic type for each second element by using a classification model, whereby a classification model which is trained on the integrated domain model and on first elements from established data sources and which is capable to match each first element with the at least one corresponding semantic type.
- outputting a recommendation for integrating each second element into the integrated domain model to a user, whereby the recommendation is related to a corresponding additional component for each second element which is derived from the at least one proposed semantic type and related to the relationship between the additional component and existing components by applying the provided set of rules.

## Description

The invention relates a method and a system for integrating elements extracted from an additional data source into an integrated domain model.

Integration of data of a data source, e.g. a sensor or other measuring equipment, is dependent on existence of integrated domain models that can represent data of various granularity and are not tailored to a single application but support arbitrary applications as well as their interoperability.
For instance, simulation tools for electrical networks (e.g. for load flow or short circuit simulation) or plant networks use proprietary data models (their topology, elements and element properties) that differ both in the format (e.g. relational database, XML) and the level of granularity and abstraction in describing the network. Another example would be integration of building structure and installed building system data for the purpose of energy and space occupation management in an integrated workflow. Building simulation work-flows hand over simulation results to multiple tools.

Semantic technologies such as RDF [4]/OWL [5] provide state-of-the-art formal languages for data integration. Two main steps of data integration workflow are:
(1) Generation/update of an Integrated Domain Model (IDM) consisting of an RDF/OWL schema (ontology) and a set of inference rules,
(2) Mapping proprietary simulation data models to the IDM.

Both steps, in particular the step (2), are very time consuming and requiring a substantial manual effort. They require, e.g. to examine the schema of a proprietary data model, to find equivalent concepts/relationships/attributes in the IDM where possible and map them accordingly, or extend the IDM in order to map the remaining part of proprietary schema.

The approaches described in [1] and [2] present machine learning and symbolic artificial intelligence (AI) methods for mapping tabular data to given ontologies.

There is an already proposed method in [3] which extracts semantic types from the semantic model IDM. Semantic types are used to label some elements in the input data sources according to their mappings to the IDM. Based on this labeled cohort, a multi-class classification model is trained where the semantic types from IDM correspond to the set of classes.

It is an object of the invention to provide an improvement to the afore-mentioned state of the art.

This is solved by what is disclosed in the independent claims. Advantageous embodiments are described in the dependent claims.

An aspect of the invention is a method for integrating second elements extracted from an additional data source into an integrated domain model describing existing components in a technical domain, existing component properties and relationships among the existing components, comprising:
- providing a set of rules describing a mapping of each type of relationship between two elements onto each type of relationship between two components,
- predicting and/or proposing at least one semantic type for each second element by using a classification model, whereby a classification model which is trained on the integrated domain model and on first elements from established data sources and which is capable to match each first element with the at least one corresponding semantic type.
- outputting a recommendation for integrating each second element into the integrated domain model to a user, whereby the recommendation is related to a corresponding additional component for each second element which is derived from the at least one predicted and/or proposed semantic type and related to the relationship between the additional component and existing components by applying the provided set of rules.

A new (additional) data source provides one or more new elements (called second elements) in contrast to existing first elements from established data sources.

Said matching can be implemented by mapping each element into a cluster of a semantically similar concept whereby more than one cluster are grouped by a corresponding semantic type.

Re-training of the classification model can be applied on the integrated domain model including the integrated additional components and relationships and on the second elements from the additional data source until the re-trained classification model is capable to assign each first and/or second element to one of the semantic types.

According to an embodiment of the invention the method further comprises:
- receiving user interactions indicating confirmation and/or correction of the recommendation,
- integrating the confirmed and/or corrected additional components and relationships into the integrated domain model.

The invention contains a machine learning method that, based on an existing version of Integrated Domain Model IDM and mappings for existing data sources as described in [3], then learns an extension and a mapping for new and/or additional data sources.
The method uses provided rules to infer new facts. The method recommends extensions of the integrated domain model with new classes and attributes as well as with relationships between the new classes and the existing classed with are derived from the rules. It may suggest new rules which can be used for further usage of the method which can be retrained with the extended integrated domain model (IDM). The recommended extension of the IDM shall be confirmed and/or corrected by a user.

A lower-layer model introduces specific classes, attributes and relationship types for a precise alignment of data sources. An instance of such a class represents an element. An upper-layer model defines a set of components and relationships that can be used to describe a technical system and/or domain. The provided rules describe a mapping of each type of relationship between two elements onto each type of relationship between two components. It is possible to introduce further top-level concepts which can be combined to a semantic type according to their similarity.

The domain is focused on a technical system (such as electrical networks topology) and its properties or a building system such as HVAC (Heating, ventilation, and air conditioning [6] and its components).

According to an embodiment of the invention the method further comprises:
- processing integrated domain model including the integrated additional components and relationships in order to control at least one physical device of the technical domain based on the additional data source.

A further aspect of the invention is a system for integrating second elements extracted from an additional data source into an integrated domain model describing existing components in a technical domain, existing component properties and relationships among the existing components, comprising at least one processor configured to:
- providing a set of rules describing a mapping of each type of relationship between two elements onto each type of relationship between two components,
- proposing at least one semantic type for each second element by using a classification model, whereby a classification model which is trained on the integrated domain model and on first elements from established data sources and which is capable to match each first element with at least one corresponding semantic type.
- outputting a recommendation for integrating each second element into the integrated domain model to a user, by the at least one processor accessing an output device, whereby the recommendation is related to a corresponding additional component for each second element which is derived from the at least one proposed semantic type and related to the relationship between the additional component and existing components by applying the provided set of rules.

Embodiments as described above for the method can be analogous applied for the system and for computer program (product) and for the computer-readable storage medium.

This system which can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:
- Figure 1: shows schematically different layers and/or levels of a semantic model describing object classes and their attributes as well as their relationships to each other;
- Figure 2: shows a so-calls UML Diagram depicting the layers and class hierarchy and relationships;
- Figure 3: shows an example for a semantic model describing a part of domain network e.g. electrical network;
- Figure 4: shows the semantic model after applying mapping rules between the relationships in a lower layer and in an upper layer;
- Figure 5: shows a potential additional component for a new element from a new data source;
- Figure 6: a recommended extension of the semantic model;
- Figure 7: an integration of the new element into the semantic model; and
- Figure 8: the same model as in figure 7, whereby inferred relationships are also integrated;

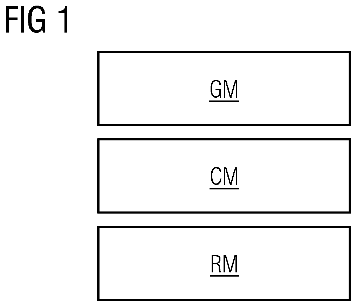

Figure 1 shows schematically different layers and/or levels of a semantic model (ontology) describing object classes and their attributes as well as their relationships to each other. The classes and relationships may be organized in hierarchies. Additionally, axioms and rules are specified by means of which implicit knowledge may be inferred.
Such a semantic model, also called integrated domain model, is structured in several layers, where the upper layers are labeled with GM and CM in the figures. The upper layer GM introduces generic classes (such as Asset, Property and Entities, etc.) and the upper layer CM includes Component, ComponentPart, Port) and relationships (has-part, connected-to, has-port). The upper layers are domain independent and shared across domains. Upper layer GM and CM can be combined to one layer.

The lower (domain reference) layer RM introduces domain-specific subclasses of Component (such as Transformer, Line, Busbar in an electrical network domain or Pump, AirHandlingUnit, WaterMeter in a building domain) and Property (NominalVoltage, Length, ...).

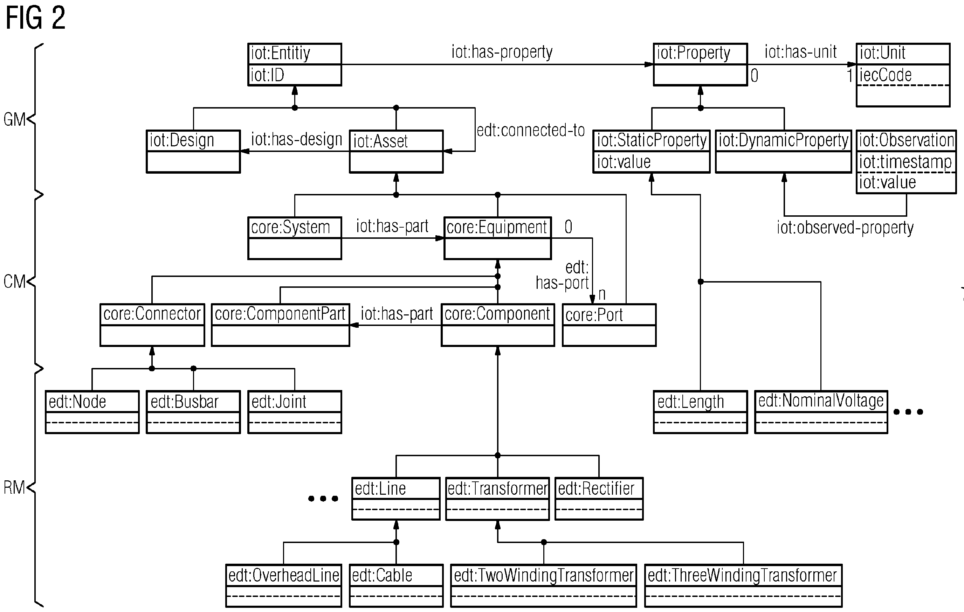

A part of such a semantic model including a domain reference model in the domain of electrical networks is depicted in figure 2. The Unified Modeling language (UML) is used.

Moreover the model, a set of rules is defined,:
(1) has-port -> has-part *[has-port is a specialization of has-part relationship]*
(2) has-part **o** connected-to -> connected-to *[an object is connected to the objects its parts are connected to]*
*(3)* connected-to -> *inverse*(connected-to) *[connected-to is symmetric]*
*(4)* Component o has-part -> ComponentPart [a Component may only have parts of type ComponentPart]
(5) Line o has-port -> LineEnd [a Line may only have ports of type LineEnd]

Rules (1)-(4) are based on the upper layer model(s), while rule (5) is used the domain reference model.

Figure 1 shows an example in the domain of electrical networks. The shown semantic model includes classes: TwoWindingTransformer, Line, and LineEnd, relationships has-part, has-port, and connected-to.

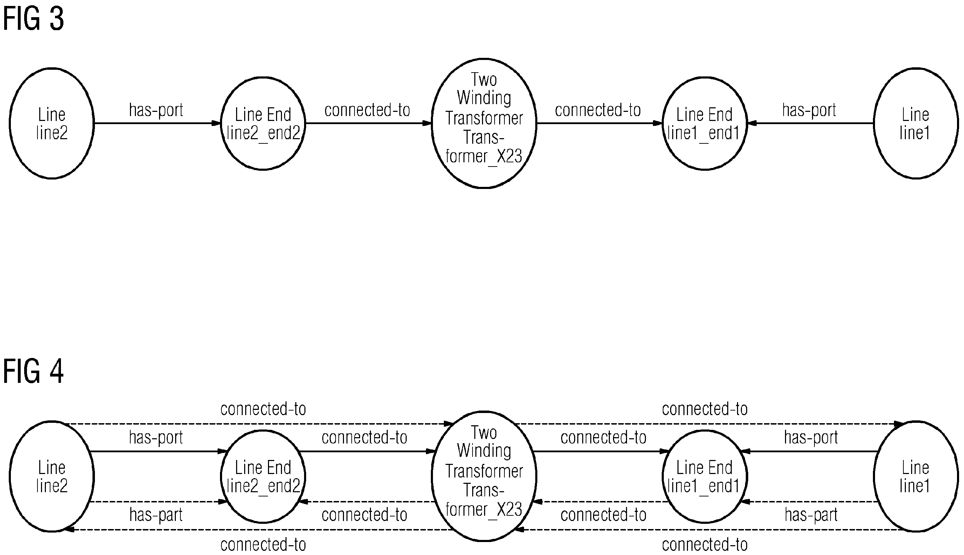

By executing the rules (1)-(3), the following new relationships can be inferred. Figure 4 shows the same classes and relationships than figure 3 enriched with the inferred relationships: has-part, connected to and so on.

In the following table data are shown which are extracted from a new (additional) data source and represent two new elements (called second elements in contrast to existing first elements) from established data sources, e.g. as described in figure 3.

| part | part-type | parent | parent-type | connected | connected-type | port |
|---|---|---|---|---|---|---|
| Ivw | LVWinding | t_X23 | 2WTransformer | line1 | Line | 1 |
| hvw | HVWinding | t_X23 | 2WTransformer | line2 | Line | 2 |

The current version of semantic model *IDM* (IDM = integrated domain model) in figure 2 is expressive enough to represent data from Figure 1, however it does not include the Winding classes.

Based on the previous mappings and trained on established data sources, the mapping method recognizes that "2WTransformer" corresponds to the "TwoWindingTransformer" class, "connected" corresponds to the relationship "connected-to", "line" corresponds to "Line", "lvw and hvw" are related via "has-part" relationship to "t_X23", and their unique names in the new model are set to "t_X23_1vw" and "t_X23_hvw". Moreover, "1" is recognized to represent a port of line1, which is an instance of the class "Line", and by applying the rule (5) "Line o has-port -> LineEnd" it is inferred that its type is "LineEnd", and its unique name is "line1_end1". Finally, it is recognized that the relationship between "lvw" and "LVWinding" (as well as "hvw" and "HVWinding") is a type relationship, i.e. lvw type LVWinding, thus marking "LVWinding" and "HVWinding" as classes. However, the mapping method cannot find classes in the domain reference model that correspond to the candidate classes "LVWinding" and "HVWinding" and these two classes become extension candidate classes. The new data source has an explicit representation of transformer windings (hvw) and (lvw). As there is no Winding class in the existing IDM. Without extending the IDM, they can only be mapped to the "ComponentPart" class, by applying the inference rule (4) "Component o has-part -> ComponentPart" and by the fact that "TwoWindingTransformer" is a subclass of Component (semantic model *IDM* **(Fehler! Verweisquelle konnte nicht gefunden werden.)).**

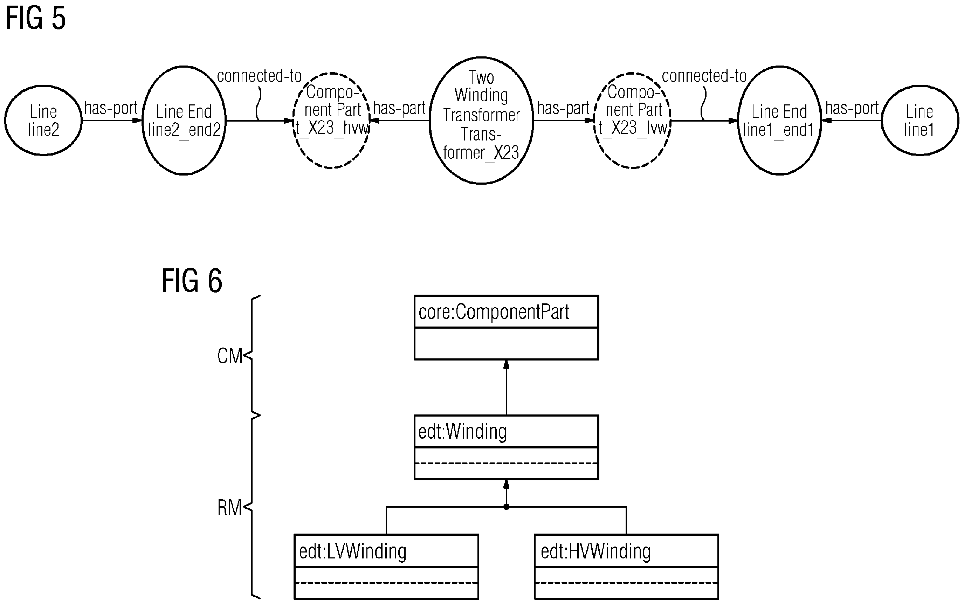

Figure 5 shows the potential additional component mapped to the "Component Part" class for the above mentioned new elements from a new data source.

Based on the "type" entries in the above shown Table, the mapping method recognizes that the extension candidate classes "LVWinding" and "HVWinding" as new or additional component are possible more specific types for t_X23_lvw and t_X23_hvw, respectively. Moreover, by a lexical analysis (finding their maximal common suffix (similar concept), it reasons that there might be a common super class called "Winding" as semantic type, and as a result it recommends the model extension as shown in **Fehler! Verweisquelle konnte nicht gefunden werden..**

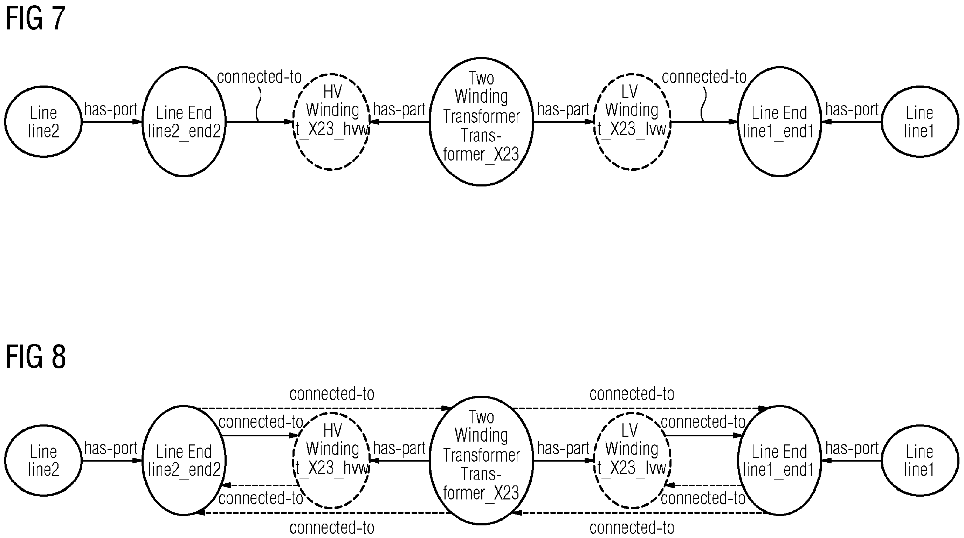

The schema extension is output as recommendation and given to a user for a review and subsequently approved to be added to a new version of the semantic model *IDM'* as shown in figure 7.

Moreover, based on the data in the new source, it is proposed that "Windings" can only be parts of "TwoWindingTransformers". The following extension of the rules set is recommended and given to a user for review.
Winding o ***inverse***(has-part) -> TwoWindingTransformer

Revised by a user, and the following rule is finally added to the set of rules:
Winding o ***inverse***(has-part) -> Transformer

As analogous depicted in figure 4 figure 7 shows the extended semantic model *IDM'* after applying mapping rules between the relationships in a lower layer and in an upper layer.

Generally described in the following, the method to integrate additional elements from an additional and/or new data source into the IDM and therefore to provide an extended IDM' can be understood as an inductive process:
- Version ***n*** of the Integrated Domain Model *IDM* (denoted *IDMn)*
- ***n*** proprietary simulation data models *M*₁,...,*Mₙ* with
   ∘ sample data with known/existing relational schema
   ∘ mappings of the relational schema to *IDMₙ*
- (*n* + 1)*th* simulation data model *M*_{*n+*1} with sample data
the method proposes a version ***n*** + **1** *of IDM* (*IDM*_{*n+*1} *or IDM'*) *which is an extension of IDMₙ* and a mapping from *M*_{*n+*1} to *IDM*_{*n+*1}*. IDM*_{*n+*1} *is a superset of IDMₙ,* the mappings *M₁,...,Mₙ* are still valid with respect to *IDM*_{*n+*1}

A mapping of the relational data source *S* to the Integrated Domain Model (*IDM*) comprises of two steps: schema matching and semantic mapping. In the schema matching step, we need to identify how elements of the relational source *S* semantically correspond to components of the *IDM.* Relational sources include the following elements: relations (aka tables), attributes (aka columns) and domains (aka constraints on attributes). IDM can include such components as: classes, literal values, individuals and properties (object or datatype). Typically, in the schema matching step we need to identify how attributes (or columns) of the relational source ***S*** match to the classes or datatype properties of the ***IDM.*** In the second step, we build the semantic mappings based on the obtained matches. These mappings specify how to translate data across the schemas. Typically, in addition to the found semantic matches we need to provide component properties that semantically connect the corresponding elements.

The mapping method outputs recommendations how to map and/ or integrate a new data source to the *IDM* and if necessary, extensions to the original model and the provided rule set. The mapping method uses Machine Learning and symbolic AI techniques.
- Data form a data source should be structured in sets of simple tables. Various data formats are possible (e.g., XML, JSON). They can be normalized into a simple table format
- As input:
   1. Semantic model *IDM* (schema) and provid-ed/given inference rules
   2. a set of training data including elements from existing data sources (schema and representative instance data) and their mappings to *IDM*
   3. elements of a new data source (schema and representative instance data)
- a classification model *CM* (as described in the [3]) trained on the input semantic model *IDM* and input data sources, that generates source data mappings to *IDM.* According to [3] semantic types are proposed which are derived from the semantic model *IDM.* These semantic types are used for elements in the input data sources according to their mappings to the *IDM.* The trained class classification model proposes the semantic types from *IDM* which correspond to the set of classes.
- As output:
   1. a mapping **M** of the elements of the new/additional data source to *IDM* produced by the classification model.
   2. Recommendation of an extension *IDM'* of the semantic model *IDM* (schema) and inference rules: schema extension includes extension of the reference model with new classes and their properties. This recommendation is inferred from **M** and the *IDM* inference rules.
   3. a mapping **M'** of the new data source to *IDM'*

A new classification model *CM' is (re-)*trained on ***IDM'*** and all existing elements of data sources and schemas. *CM'* is trained using the same approach (the same machine learning algorithm) as *CM* (see above) with the difference in input data sources and the semantic model. In terms classification, this means respectively different instance data and a different (extended) set of classes.

Finally, the integrated domain model IDM' including the integrated additional components and relationships is processed by at least one processor of a (computing) system in order to control at least one physical device of the technical domain (e.g. electrical network) based on the additional data source.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the (computer) system and/or another processor may be configured to implement the acts described herein.

The above-described method may be implemented via a computer program product including one or more computer-readable storage media having stored thereon instructions executable by one or more processors of a (computing) system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

### References

[1] M. Taheriyan, C.A. Knoblock, P. Szekely, and J.L. Ambite. Learning the semantics of structured data sources. Web Semantics: Science, Services and Agents on the World Wide Web, 37:152-169, 2016.
[2] D De Una, N Rümmele, et al. Machine Learning and Constraint Programming for Relational-To-Ontology Schema Mapping. IJCAI 2018
[3] EP20198304
[4] https://en.wikipedia.org/wiki/RDF_Schema
[5] https://en.wikipedia.org/wiki/Web_Ontology_Language
[6] https://en.wikipedia.org/wiki/Heating,_ventilation,_and_air_c onditioning

## Claims

1. Method for integrating second elements extracted from an additional data source into an integrated domain model describing existing components in a technical domain, existing component properties and relationships among the existing components, comprising:
- providing a set of rules describing a mapping of each type of relationship between two elements onto each type of relationship between two components,
- proposing at least one semantic type for each second element by using a classification model, whereby a classification model which is trained on the integrated domain model and on first elements from established data sources and which is capable to match each first element with the at least one corresponding semantic type.
- outputting a recommendation for integrating each second element into the integrated domain model to a user, whereby the recommendation is related to a corresponding additional component for each second element which is derived from the at least one proposed semantic type and related to the relationship between the additional component and existing components by applying the provided set of rules.

2. Method according to the preceding claim, wherein said matching is implemented by mapping each element into a cluster of a semantically similar concept whereby more than one cluster are grouped by a corresponding semantic type.

3. Method according to claim 1 or 2, further comprising:
- receiving user interactions indicating confirmation and/or correction of the recommendation,
- integrating the confirmed and/or corrected additional components and relationships into the integrated domain model.

4. Method according to at least one of the preceding claims, further comprising:
- re-training the classification model on the integrated domain model including the integrated additional components and relationships and on the second elements from the additional data source until the re-trained classification model is capable to assign each first and/or second element to one of the semantic types.

5. Method according to at least one of the preceding claims, further comprising:
- processing integrated domain model including the integrated additional components and relationships in order to control at least one physical device of the technical domain based on the additional data source.

6. A system for integrating second elements extracted from an additional data source into an integrated domain model describing existing components in a technical domain, existing component properties and relationships among the existing components, comprising at least one processor configured to:
- providing a set of rules describing a mapping of each type of relationship between two elements onto each type of relationship between two components,
- proposing at least one semantic type for each second element by using a classification model, whereby a classification model which is trained on the integrated domain model and on first elements from established data sources and which is capable to match each first element with the at least one corresponding semantic type.
- outputting a recommendation for integrating each second element into the integrated domain model to a user, by the at least one processor accessing an output device, whereby the recommendation is related to a corresponding additional component for each second element which is derived from the at least one proposed semantic type and related to the relationship between the additional component and existing components by applying the provided set of rules.

7. System according to the preceding claim, wherein the at least one processor is further configured to:
- implementing the matching by mapping each element into a cluster of a semantically similar concept whereby more than one cluster are grouped by a corresponding semantic type.

8. System according to claim 6 or 7, wherein the at least one processor is further configured to:
- receiving, by the at least one processor accessing an input device, user interactions indicating confirmation and/or correction of the recommendation,
- integrating the confirmed and/or corrected additional components and relationships into the integrated domain model.

9. System according to at least one of the preceding claims, wherein the at least one processor is further configured to:
- re-training the classification model on the integrated domain model including the integrated additional components and relationships and on the second elements from the additional data source until the re-trained classification model is capable to assign each first and/or second element to one of the semantic types.

10. System according to at least one of the preceding claims, wherein the at least one processor is further configured to:
- processing integrated domain model including the integrated additional components and relationships in order to control at least one physical device of the technical domain based on the additional data source.

11. Computer program product which is being executed by one or more processors of a computer in order to perform a method according to any of the method claims.

12. Computer readable storage media with a computer program product according to the preceding claim.
